# EUROPÄISCHE PATENTANMELDUNG

(11) **EP 3 554 063 A1**
(43) Veröffentlichungstag der Anmeldung: **16.10.2019**
(21) Anmeldenummer: 18166444.2
(22) Anmeldetag: 10.04.2018
(51) Int. Cl.: H04N 5/232, G01C 15/00, G03B 7/095

(54) **DIGITALER SUCHER**

(71) Anmelder: Leica Geosystems AG, 9435 Heerbrugg (CH)
(72) Erfinder: SCHEJA, Jochen, A-6845 Hohenems (AT); KIPFER, Peter, CH-9443 Widnau (CH)
(74) Vertreter: Kaminski Harmann

(57) **Zusammenfassung**

Die Erfindung betrifft ein elektronisches Sucher-System (1) mit einer elektronischen Bildaufnahmeeinrichtung (2) zur Aufnahme eines digitalen Bildes (9), einer elektronischen Bildanzeigeeinrichtung (3) und einer Steuereinheit (4), welche derart ausgebildet ist, entsprechend eines wählbaren Zoomfaktors (7) ein digitales Zoom eines aktuell gewählten Ausschnitts (8) des aufgenommenen digitalen Bildes (9) auf der elektronischen Bildanzeigeeinrichtung (3) bereitzustellen.

Entsprechend der Erfindung ist dabei die Steuereinheit (4) derart ausgebildet, dass durch diese in Abhängigkeit vom Zoomfaktor (7) automatisch eine Aperturblende (5) der Bildaufnahmeeinrichtung (2) verstellt wird.

## Beschreibung

Die Erfindung betrifft ein elektronisches Sucher-System nach dem Oberbegriff des Anspruchs 1, ein Verfahren zur Bereitstellung eines digital zoombaren Sucherbilds, sowie speziell auch ein Vermessungsgerät mit einem derartigen Sucher-System und ein Anzielverfahren mit einem solchen Sucher-System.

Die vorliegende Erfindung betrifft elektronische, digitale Suchersysteme, welche für ein Auffinden eines visuellen Ziels in einem aufgenommenen digitalen Kamerabild und einer darauf folgenden, möglichst genauen visuellen Anzielung dieses Ziels im Kamerabild ausgebildet sind.

Die Erfindung betrifft beispielsweise Ausführungsformen von elektronischen Suchern in geodätischen Vermessungsgeräten, beispielsweise in Tachymetern, Totalstationen, oder vergleichbaren Geräten zur optischen Anzielung von Zielpunkten, Zielmarken oder Zielobjekten, welche dann vom Vermessungsgerät mit hoher Genauigkeit, also beispielsweise mit einer Messgenauigkeit von einigen Zentimetern, Millimetern oder darunter vermessen werden. Beispiele für derartige Geräte finden sich unter anderem etwa in US 2007/104 353, US 2009/024 342, US 2015/176 991, EP 1 836 457, EP 3 182 065. Dabei gilt es z.B. eine optische Messachse, beispielsweise eines Laser-Entfernungsmessers exakt auf das Messziel auszurichten, wobei ein erfindungsgemäßer elektronischer Sucher mit einer Bilderfassungseinrichtung im Vermessungsgerät und einem elektronischen Bildanzeigeeinrichtung (z.B. am Vermessungsgerät oder in einer externen Bedieneinheit) einsetzbar ist. Auf der Bildanzeigeeinheit kann dabei eine gewünschtes Messziel ausgewählt werden, welches dann durch Bewegung der Mess- und Zielachsen des Vermessungsgeräts angezielt wird, entweder automatisch oder durch manuelles Bewegen der Achsen, bis das Messziel auf der Zielachse des Messgeräts zum Liegen kommt. Meist ist dabei die Zielachse zumindest annähernd zentrisch im Bild der Bilderfassungseinrichtung angeordnet. Um ein Anzielen durchzuführen, wird dabei meist erst ein Übersichtsbild eines verhältnismäßig großen Teils der Messumgebung auf dem Display betrachtet, beispielsweise das vollständige Blickfeld der Bilderfassungseinrichtung oder gar eine Panorama-Aufnahme. In diesem Übersichtsbild wird dann ein Zielobjekt identifiziert und ausgewählt. Um dieses Zielobjekt wirklich exakt anzielen zu können erfolgt dabei ein Zoomen im Übersichtbild, hin zu einem Detailbild, in welchem in vergrößerter Weise nur noch ein Ausschnitt des Blickfelds der Bilderfassungseinrichtung dargestellt ist. In dieser vergrößerten Ansicht kann ein gewünschter Zielpunkt der Messung am Zielobjekt entsprechend genauer ausgewählt werden, beispielsweise durch Auswahl des Zielpunkts auf einem Touch-Screen oder durch Bewegen der Zielachse des Geräts bis sich der Zielpunkt in einem Fadenkreuz oder dergleichen befindet. Daraufhin kann eine entsprechende Vermessung des Zielpunkts erfolgen.

Bei einem derartigen Anzielvorgang mit einem elektronischen Sucher ist eine entsprechend scharfe Abbildung der Messziels durch die Bildanzeigeeinrichtung, und folglich auch eine entsprechend scharfe Aufnahme durch die Bilderfassungseinrichtung erforderlich. Gut abbildende Optiken für Bilderfassungseinrichtung, welche wenig Abbildungsfehler, insbesondere über weite Erfassungsbereiche, aufweisen, sind aber entsprechend komplex, aufwändig und empfindlich und müssen vielfach sogar individuell justiert oder kalibriert werden. Speziell aus Herstellersicht ist es dabei aber erstrebenswert, mit einer möglichst einfachen Bilderfassungseinrichtung, ein hinreichendes Ergebnis für die geforderte Anwendung zu erzielen, insbesondere in Bezug auf die Objektiveinheit der Bilderfassungseinrichtung.

Es ist daher eine Aufgabe der vorliegenden Erfindung ein elektronisches Sucher-System zu verbessern, insbesondere im Hinblick auf die spezifischen Anforderungen in einem geodätischen Vermessungsgerät.

Ein Teilaspekt der Aufgabe ist dabei auch, ein für die geforderte Aufgabe hinreichendes oder verbessertes Sucher-System bereitzustellen, welches sich mit vergleichsweise geringer oder vorzugsweise reduzierter Komplexität und/oder mit geringerem Aufwand realisierbar ist. Speziell vorteilhaft ist dabei auch eine weitgehende Verwendung von Standardkomponenten und eine Reduktion von individuellen Spezialkomponenten und Spezialaufbauten, speziell beispielsweise bei optischen Systemen. Als eine Aufgabe kann auch eine Verlagerung von jeweils sehr spezifischer mechanischer und optischer Komplexität hin zu flexibleren Software-Lösungen angesehen werden.

Diese Aufgaben werden erfindungsgemäß durch die Merkmale der unabhängigen Ansprüche und/oder durch Merkmale der abhängigen Ansprüche gelöst bzw. diese Lösungen weitergebildet.

Die vorliegende Erfindung betrifft speziell ein elektronisches Sucher-System, mit einer elektronischen Bildaufnahmeeinrichtung zur Aufnahme eines digitalen Bildes, einer elektronischen Bildanzeigeeinrichtung und einer Steuereinheit. Die Bildaufnahmeeinrichtung kann dabei insbesondere als eine Messkamera in einem geodätischen Messinstrument oder in einem industriellen optischen Koordinatenmessgerät ausgebildet sein, mit welcher ein Zielobjekt beobachtet und/oder anvisiert werden kann. Die Bildanzeigeeinrichtung kann dabei insbesondere zur Auswahl, Anzielung und/oder Bildkoordinatenvermessung eines Zielobjekts im digitalen Bild ausgebildet sein. Die Steuereinheit ist dabei derart ausgebildet, um entsprechend eines wählbaren Zoomfaktors ein digitales Zoom eines aktuell gewählten Ausschnitts des aufgenommenen digitalen Bildes auf der elektronischen Bildanzeigeeinrichtung bereitzustellen. Der Zoomfaktor kann dabei beispielsweise von einer (allenfalls entsprechend auch verkleinerten) Darstellung des gesamten, von der Bildaufnahmeeinrichtung erfassten digitalen Bildes bis hin zur Darstellung eines (allenfalls auch interpolierten) vergrößerten Teilausschnitts dieses Bildes reichen. Das Zoomen kann beispielsweise mit einem Resize- und/oder einem Resample-Algorithmus erfolgen.

Erfindungsgemäß ist die Steuereinheit dabei derart ausgebildet, dass in Abhängigkeit vom Zoomfaktor automatisch eine Öffnung einer Aperturblende der Bildaufnahmeeinrichtung verstellt wird. Die Aperturblende kann dabei z.B. eine optische oder mechanische Blende sein, welche elektrisch ansteuerbar ist, und mit welcher eine lichtdurchlässige Öffnung in ihrer Größe, also z.B. in ihrem Durchmesser, veränderbar ist. Im hier verwendeten Sinne bezeichnet der Begriff "Blende" speziell eine Aperturblende, speziell z.B. eine verstellbare Irisblende und keine Feldblende zur Auswahl eines Bildausschnitts. Beispielsweise kann die Aperturblende als eine stufenlos einstellbare Irisblende ausgeführt sein, alternativ aber auch in Form einer in zumindest zwei (aber allenfalls auch drei oder mehr) diskreten Stufen einstellbaren Irisblende, oder mit zumindest einer einschwenkbaren Blende (also einem monolithen Element mit einem Loch, welches in den Strahlengang der Bilderfassungseinrichtung als Apertur einschwenkbar ist), aber auch mit zwei oder mehreren beweglichen Elementen welche durch Verschieben, Drehen oder Verformen eine verstellbare Aperturöffnung bereitstellen (also etwa eine zweiteilige Blende), sowie optional auch einer LCD-Blende.

Das zoomfaktorabhängige Verstellen der Blende erfolgt dabei insbesondere live, also während der Aufnahme und Bereitstellung des gewählten Ausschnitts des aufgenommenen digitalen Bildes auf der Bildanzeigeeinrichtung, speziell bei einer Veränderung des Zoomfaktors.

Beim Sucher-System kann dabei speziell mit einem stärker vergrößernden Zoomfaktor - also insbesondere hin zu einer vergrößerten Darstellung des digitalen Bildes - ein automatisches Verkleinern einer Blendenzahl der Aperturblende, also insbesondere hin zu einer größeren Blendenöffnung der Aperturblende, erfolgen. Eine Ausführungsform einer Objektiveinheit der Bildaufnahmeeinrichtung kann dabei auch mit einer festen Brennweite ausgebildet sein. Insbesondere ist die Brennweite zumindest im Rahmen des erfindungsgemäßen digitalen Zoomens und dem automatischen Einstellen der Aperturblende konstant. Die Objektiveinheit der Bildaufnahmeeinrichtung kann mit einer fixen oder mit einer variablen Fokuseinstellung ausgebildet sein, wobei der variable Fokus insbesondere mit einem Verschieben eines Kamerachips in Bezug auf eine oder mehrere Linsengruppen oder auf die gesamte Objektiveinheit erfolgen kann, wobei das Verschieben meist im wesentlichen entlang einer optischen Achse des Bildaufnahmesystems erfolgt. Eine Ausführungsform einer Objektiveinheit der Bildaufnahmeeinrichtung kann dabei speziell als einfach aufgebaute, nicht alle optischen Fehler vollständig korrigierende Objektiv-Optik ausgebildet sein, beispielsweise als eine Optik mit nur zwei Gliedern oder als eine Triplet-Optik mit drei Gliedern, so etwa auch als Objektiveinheit bestehend aus drei sphärischen Linsen. Beispielsweise kann eine Ausführungsform einer Objektiveinheit mit drei sphärischen Linsen aufgebaut sein, oder in einer anderen Ausführungsform mit einer diffraktiven Optik, oder in einer nochmals anderen Ausführungsform mit einer Einzellinse und einem Dublet.

In manchen Ausführungsformen kann die Bildanzeigeeinrichtung dabei auch räumlich und/oder gegenständlich getrennt von der Bildaufnahmeeinrichtung ausgebildet sein, beispielsweise als Bildanzeigeeinrichtung einer verdrahteten oder drahtlos angebundenen Bedieneinheit, welche speziell auch als Smartphone oder Tablet-PC ausgebildet sein kann.

In einer erfindungsgemäßen Ausführungsform kann dabei eine physikalische Bildauflösung der Bildaufnahmeeinrichtung größer sein als eine physikalische Bildauflösung der Bildanzeigeeinrichtung (bzw. der physikalischen Bildauflösung in Form einer Anzahl von physikalischen Bildpunkten jenes Bereichs der Bildanzeigeeinrichtung, in welchem das Bild bzw. der Ausschnitt dargestellt wird). Beispielsweise kann die Bildauflösung um mehr als das Doppelte, mehr als das Vierfache, oder auch noch größer ausgebildet sein.

Eine Ausführung des erfindungsgemäßen Sucher-Systems kann dabei auch derart ausgebildet sein, dass die Bildaufnahmeeinheit mit einer ersten Öffnung (oder auch Öffnungsstellung) der Aperturblende ausgebildet ist, bei welcher eine erste Anzeige eines Ausschnitts des von der Bildaufnahmeeinheit aufgenommenen digitalen Bilds mit einer ersten Vergrößerung auf der Anzeigeeinheit erfolgt, sowie die Bildaufnahmeeinheit mit einer zumindest zweiten Öffnung der Aperturblende ausgebildet ist, bei welcher eine zweite Anzeige eines Ausschnitts des von der Bildaufnahmeeinheit aufgenommenen digitalen Bilds mit einer zweiten Vergrößerung auf der Anzeigeeinheit erfolgt. Dabei ist die erste Öffnung kleiner als die zweite Öffnung und die erste Vergrößerung kleiner als die zweite Vergrößerung und es kann insbesondere ein automatischer Wechsel zwischen der ersten Öffnung und der zweiten Öffnung erfolgen, welcher durch eine Änderung von der ersten Vergrößerung zur zweiten Vergrößerung hervorgerufen wird. Wobei in diesem Sinne ein Ausschnitt allenfalls auch das vollständige digitale Bild umfassen kann.

Erfindungsgemäß kann also beispielsweise ein Messgerät oder Vermessungsgerät, bei welchem eine Anzielung von Messzielen über einen elektronischen Sucher-System durchgeführt wird, verbessert werden. Dabei wird bei einem digitalen Zoomen eines Ausschnitts eines, von einer Bilderfassungseinrichtung aufgenommenen Bildes (welcher Ausschnitt das Messziel enthält), auch eine Anpassung einer Blendenöffnung in der Bilderfassungseinrichtung durchgeführt, welche speziell im Hinblick auf diesen Ausschnitt, speziell auf dessen Vergrößerung hin erfolgt. Speziell wird dabei z.B. eine Blende (oder Apertur oder Iris) einer Objektiveinheit oder Kamera-Optik der Bilderfassungseinrichtung dem aktuell digital gezoomten Ausschnitt entsprechend angepasst. Je nach Ausführungsform kann damit speziell auf eine einstellbare Brennweite und/oder allenfalls auch auf einen einstellbaren Fokus verzichtet werden. Was jedoch per se nicht zwingend ausschließt, dass in manchen Ausführungsformen optional auch zusätzlich ein Fokus und/oder eine Brennweitevorzugsweise unabhängig von der vorliegenden Erfindung - einstellbar, ausgebildet sein können. Eine Selektion eines Messziels kann dabei entweder manuell, automatisch oder mit einem semiautomatischen Erkennen und/oder Vorschlagen von Messzielen erfolgen.

Eine spezielle der vielfältigen Ausführungsformen der Erfindung betrifft auch ein geodätisches Vermessungsgerät mit einer Zielachse, beispielsweise eine optische Zielachse zur Winkelvermessung und/oder eine Messachse eines Laserentfernungsmessers, zur geometrischen Vermessung von Koordinaten eines Zielobjekts, welches mit der Zielachse anvisiert wird. Das geodätische Vermessungsgerät ist dabei mit einer Ausführungsform eines hier beschriebenen, elektronischen Sucher-System ausgebildet. Dabei kann speziell die Zielachse zu einer optischen Achse der Bilderfassungseinrichtung des elektronischen Sucher-Systems im wesentlichen zentrisch ausgerichtet sein, insbesondere auch im wesentlichen parallel oder koaxial. Das geodätische Vermessungsgerät kann dabei beispielsweise insbesondere als Theodolit, Tachymeter oder Totalstation ausgebildet sein.

Die Erfindung betrifft ebenfalls eine Methode oder ein Verfahren zum automatischen Steuerung eines elektronischen Sucher-Systems mit Zoom-Funktion, beispielsweise in einem geodätischen Vermessungsgerät oder einem anderen Gerät zur visuellen Anzielung eines Ziels. Bei diesem Verfahren erfolgt ein Verändern der Öffnung einer Blende einer Bilderfassungseinrichtung des Sucher-Systems. Dieses Verändern erfolgt erfindungsgemäß in Abhängigkeit eines digitalen Zoomfaktors einer Darstellung eines, von der Bilderfassungseinrichtung aufgenommenen, digitalen Bildes auf eine Bildanzeigeeinrichtung des Sucher-Systems. Das Verändern kann dabei insbesondere derart erfolgen, dass die Öffnung bei einem stärker vergrößernden digitalen Zoomfaktor größer ist als bei einem weniger stärk vergrößernden digitalen Zoomfaktor.

Ebenfalls ein Aspekt der Erfindung ist ein Verfahren zur Bereitstellung eines digital zoombaren Bildes in einem elektronischen Sucher-System zur Anzielung eines Zielobjekts, insbesondere in einem geodätischen Vermessungsgerät. Dies kann erfolgen mit:
o Einem Aufnehmen eines digitalen Bildes mit einer Bilderfassungseinrichtung, in welchem digitalen Bild das Zielobjekt - vorzugsweise im wesentlichen zentral - bildlich dargestellt ist;
o Einem digitalen Zoomen eines aktuell gewählten Ausschnitts des aufgenommenen digitalen Bildes entsprechend eines wählbaren Zoomfaktors;
o Einem Bereitstellen des aktuell gewählten Ausschnitts zur Anzeige auf einer elektronischen Bildanzeigeeinrichtung; und
o Einem automatischen Verändern einer Öffnung einer Aperturblende der Bildaufnahmeeinrichtung in Abhängigkeit vom Zoomfaktor, wobei insbesondere die Öffnung der Aperturblende bei stärker vergrößerndem Zoomfaktor vergrößert werden kann.

Eine Ausführungsform der Erfindung betrifft auch ein Verfahren zum Anzielen eines Zielobjekts mit einem elektronischen Sucher-System, insbesondere in einem geodätischen Vermessungsgerät. Dies kann z.B. erfolgen mit:
o Einem Aufnehmen eines digitalen Bildes mit einer Bildaufnahmeeinrichtung, in welchem digitalen Bild das Zielobjekt dargestellt ist;
o Einem Auswählen des Zielobjekts im digitalen Bild;
o Einem, insbesondere automatisch von einer Steuereinheit durchgeführten oder manuell ausgeführten, Anzielen des ausgewählten Zielobjekts im digitalen Bild, beispielsweise ein im wesentlichen zentrischen Anzielen durch ein Ausrichten einer optischen Achse der Bildaufnahmeeinrichtung auf das Zielobjekt;
o Einem digitalen Vergrößern eines zentralen Ausschnitts des digitalen Bildes um einen wählbaren Zoomfaktor, in welchem Ausschnitt das Zielobjekt abgebildet ist,
o wobei mit einem Verändern des Zoomfaktors automatisch, insbesondere von einer elektronischen Steuereinheit, ein Verändern einer Öffnung einer Aperturblende der Bildaufnahmeeinrichtung durchgeführt wird, bei welcher beispielsweise bei einem stärkeren digitalen Vergrößern ein Weiten der Öffnung der Aperturblende erfolgt.

In anderen Worten kann ein spezieller Aspekt von vielen der hier angeführten Ausführungsformen der Erfindung auch darin gesehen werden, dass eine automatische Auswahl einer Blendeneinstellung abhängig von einer Zoomstufe eines in einem Display angezeigten, vorzugsweise zentralen, Bildausschnittes erfolgen. Die Zoomstufe kann dabei speziell ein Verhältnis einer anzeigten Bildauflösung am Display gegenüber einer Bildauflösung eines tatsächlich von einer Kamera aufgenommenen Bilds definiert sein. Dabei kann diese automatische Auswahl insbesondere derart ausgebildet sein, um für jede Zoomstufe eine optimale Bildschärfe des am Display angezeigten Ausschnitts oder Bilds zu generieren.

Die Erfindung kann dabei zumindest teilweise von einer elektronischen Steuereinheit ausgeführt werden, welche zumindest teilweise programmierbar ist, beispielsweise mit einem Digitalrechner oder vergleichbaren Komponenten. Daher betrifft die vorliegende Erfindung auch eine Ausführungsform in Form eines Computerprogrammprodukts mit Programmcode, welcher auf einem physikalischen Datenträger gespeichert oder als elektromagnetische Welle (z.B. als mittels Funk übertragenes Datensignal) bereitgestellt wird, und zur Ausführung auf einem Digitalrechner ausgebildet ist. Erfindungsgemäß kann ein solcher Programmcode dabei speziell eine Folge von Instruktionen aufweisen, welche ausgebildet sind, um in Abhängigkeit eines, dem Digitalrechner als Wert zugänglichen, gewählten Zoomfaktors eines von Programmcode zur Anzeige bereitgestellten Ausschnitts eines von einer Bilderfassungseinrichtung aufgenommenen digitalen Bildes, ein elektrisches Ansteuersignal oder ein entsprechendes Datensignal zur Einstellung einer Aperturblende der Bildaufnahmeeinrichtung bereitzustellen, insbesondere mit einem Ermitteln oder Berechnen der Einstellung einer Aperturblende anhand einer im Programmcode programmierten Funktion in Abhängigkeit des Zoomfaktors. In einer Ausführungsform kann dabei der Programmcode auch zur Bereitstellung des Ausschnitts zur Anzeige, zur Erfassung oder zum Einlesen des digitalen Bildes, Berechnung eines mit dem Zoomfaktor skalierten Ausschnitts aus dem digitalen Bild, und/oder weiteren Funktionen ausgebildet sein. Dieser Programmcode kann dabei speziell in einer Steuereinheit eines elektronischen Sucher-Systems entsprechend der Erfindung oder in einem Gerät mit ebensolchem ausgeführt werden

Das erfindungsgemäße Verfahren und die erfindungsgemäße Vorrichtung werden nachfolgend anhand von, in den Zeichnungen schematisch dargestellten, konkreten Ausführungsbeispielen rein beispielhaft näher beschrieben, wobei auch auf weitere Vorteile der Erfindung eingegangen wird. Im Einzelnen zeigen:
Fig. 1a eine schematische Darstellung einer Ausführungsform der vorliegenden Erfindung in einem geodätischen Vermessungsgerät;
Fig. 1b und Fig. 1c eine erste und eine zweite beispielhafte Ausführungsform eines erfindungsgemäß ausgebildeten elektronischen Sucher-Systems, beispielsweise im geodätischen Vermessungsgerät aus Fig. 1a;
Fig. 2a, Fig. 2b, Fig. 2c und Fig. 2d Einige exemplarische Beispiele von Ausführungsformen von einfachen Objektivsystemen für Bilderfassungsgeräte entsprechend der vorliegenden Erfindung;
Fig. 3a und Fig. 3b Darstellungen von beispielhaften elektronischen Sucher-Anzeigen von Übersichtsbildern zur Erläuterung der Erfindung;
Fig. 4a und Fig. 4b Darstellungen von beispielhaften elektronischen Sucher-Anzeigen von gezoomten Anziel-Ausschnitten zur Erläuterung der Erfindung;
Fig. 5 Ausführungsformen eines Beispiels eines Übersichtsbilds eines Vermessungs-Szenarios an einem Display einer Bedieneinheit für ein geodätisches Vermessungsgerät;
Fig. 6a und Fig. 6b Ausschnitte aus dem Randbereich von obigem Übersichtsbild - zur Illustration der Ergebnisse mit und ohne Anwendung der vorliegenden Erfindung;
Fig. 7a und Fig. 7b Ausführungsformen von zwei Beispielen einer Zoom Ansicht auf ein anzuzielendes Messziel aus dem vorangegangenen Vermessungs-Szenarios an einem Display einer Bedieneinheit für ein geodätisches Vermessungsgerät - zur Illustration der Ergebnisse ohne und mit Anwendung der vorliegenden Erfindung;
Fig. 8 Ausführungsformen einer erfindungsgemäßen Methode in Form eines Blockdiagramms.

Die Darstellungen in den Figuren dienen lediglich zur Illustration und sind, sofern nicht explizit angegeben, nicht als exakt maßstäblich zu betrachten. Gleiche oder funktionell ähnliche Merkmale sind, insoweit praktikabel, durchgängig mit denselben Bezugszeichen versehen und werden gegebenenfalls mit einem Buchstaben als Index unterschieden. Die dargestellten Schemata zeigen jeweils die technische Grundstruktur, welche von einem Fachmann entsprechend allgemeinen Grundsätzen ergänzt oder modifiziert werden können. Die Begriffe im wesentlichen, substantiell, oder zumindest annähernd bringen dabei zum Ausdruck, dass ein Merkmal zwar vorzugsweise, aber nicht zwingend zu 100% exakt oder exakt wie wörtlich beschrieben ausgebildet sein muss, sondern das auch geringfügige Abweichungen zulässig sind - nicht nur in Bezug auf unvermeidliche praktische Ungenauigkeiten und Toleranzen, sondern speziell z.B. auch soweit dabei die für die Erfindung wesentliche technische Wirkung weitestgehend erhalten bleibt.

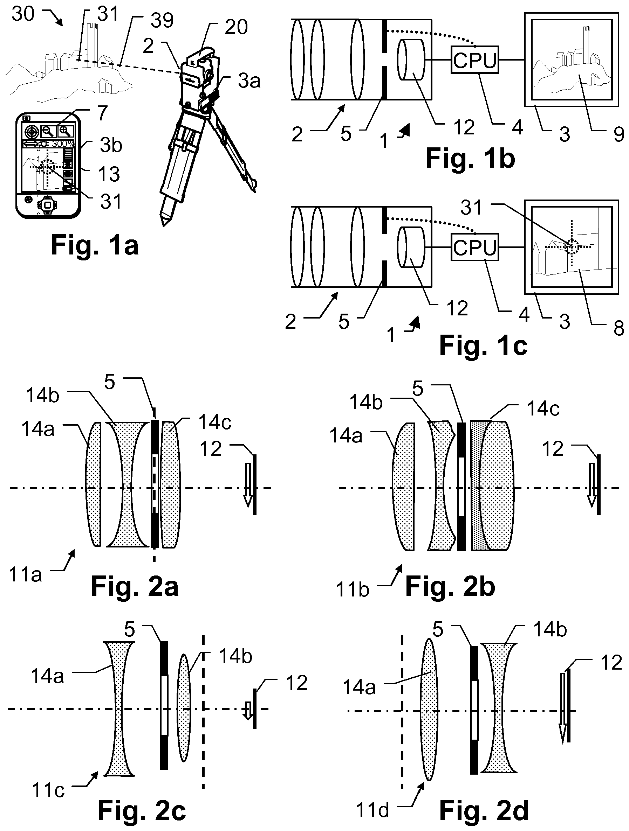

**Fig. 1a** zeigt schematisch ein mögliches Beispiel einer Ausführungsform eines erfindungsgemäßen elektronischen Sucher-Systems in einem geodätischen Vermessungsgerät. Mit dem stationierten Gerät 20 soll dabei eine Vermessung von spezifischen Messpunkten 31 eines Gebäudes 30 erfolgen, indem der Mess- oder Zielpunkt 31 mit der Zielachse 39 anvisiert wird, welche Zielachse 39 auch mit einem Laserentfernungsmesser in Richtung der Zielachse 39 ausgebildet sein kann.

Das elektronische Sucher-System weist dabei eine Bildaufnahmeeinheit 2 mit einer Kamera zur Erfassung eines digitalen (zumeist visuellen) Bildes in Messrichtung des Geräts, speziell des Gebäudes 30, welches den Messpunkt 31 aufweist. Speziell auch um ein Messgerät möglichst universell einsetzbar zu gestalten, wird vielfach auch angestrebt, mit dem Sucher ein Überblicks-Bild mit hinreichend großem Blickwinkel bereitzustellen zu können, um dem Benutzer die Orientierung zu erleichtern - und nicht nur einen kleinen Blickwinkel, wie dies vielfach bei einfachen fix vergrößernden Anziel-Teleskopen der Fall ist, welche aber wiederum Vorteile in Bezug auf eine möglichst exakte Anzielung eines Zielpunkts bieten. Zum Sucher-System gehört auch eine Bildanzeigeeinheit 3 mit einem Display oder Bildschirm, beispielsweise mit einem im Gerät 20 verbauten Display 3a und/oder mit einem Display 3b einer externen Bedieneinheit 13 für das Gerät 20, welche beispielsweise auch in Form eines drahtlos angebundenen Smartphone, Tablet-PC, oder ähnlichem ausgebildet sein kann.

Entsprechend der Erfindung ist das an die Bildanzeigeeinheit 3 bereitgestellte Bild dabei digital, also nicht optisch, sondern in den von der Bilderfassungseinheit 2 bereitgestellten Bilddaten, mit einem von einem Benutzer oder vom Gerät 20 wählbaren Vergrößerungsfaktor oder Zoomfaktor 7 digital zoombar, welcher hier durch ein Vergrößerungs- und Verkleinerungssymbol illustriert ist. Der digitale Zoomfaktor 7 (oder Vergrößerungsfaktor oder Skalierungsfaktor) kann dabei - speziell je nach den technischen Daten von Bilderfassungseinheit 2 und Bildanzeigeeinheit 3 - größer eins (=vergrößernd) und/oder kleiner eins (=verkleinernd) gewählt werden. Digitales zoomen kann beispielsweise auch als eine rechnerische Anpassung der Auflösung der aufgenommenen Bilddaten der Bilderfassungseinheit 2 auf ein Ausgabeformat auf der Bildanzeigeeinheit 3 beschrieben werden. Neben Zoomen wird hierbei teilweise auch der Begriff Skalieren verwendet, obgleich dieser per se nicht zwingend ein erfindungsgemäß durchführbares, vergrößertes Darstellen eines Ausschnitts eines digitalen Bildes, also ein Skalieren eines gewählten Bildausschnitts zur Darstellung in vergrößerter Form, beschreibt. Dabei kann das digitale Zoomen auch ein Vergrößern über die physikalische Auflösung der tatsächlich von der Bilderfassungseinheit 2 erfassten Bilddaten hinaus umfassen, wobei z.B. neben einer einfachen Vervielfachung von Pixels auch entsprechende Interpolationsverfahren zur Anwendung kommen können. Allgemeine Algorithmen für digitales Zoomen in unterschiedlichsten Ausprägungen sind aus dem Gebiet der numerischen Bildverarbeitung bekannt. Speziell im Bereich von digitalen Zoomverfahren unter Anwendung von künstlicher Intelligenz (AI) und/oder Maschinenlernen (ML), welche erfindungsgemäß optional ebenfalls anwendbar sind, gibt es große Fortschritte.

Das Gerät 20 ist dabei mit einem erfindungsgemäßen elektronischen Sucher-Systems 1 ausgestattet, welches daneben in **Fig. 1b und Fig. 1c** schematisch dargestellt ist.

Zwischen der Bilderfassungseinheit 2 und der Bildanzeigeeinheit 3 des elektronischen Sucher-Systems 1 ist hier eine Steuereinheit 4 gezeigt. Diese Einheiten arbeiten dabei vorzugsweise weitestgehend elektronisch, und insbesondere digital. Die Steuereinheit 4 kann beispielsweise mit einer teilweise programmierbaren und/oder teilweise festprogrammierten Recheneinheit ausgebildet sein, beispielsweise mit einem Mikrocontroller, DSP, CPU, FPGA, ASIC, etc. und kann optional, neben einem Programmcode zur Ausführung der Erfindung, auch noch für weitere Aufgaben im elektronischen Sucher-System 1 und/oder Messgerät 20 ausgebildet sein. Die Steuereinheit 4 verfügt entsprechend zumindest über die erforderlichen Schnittstellen zur Bereitstellung von Anzeigedaten 9 für die Bildanzeigeeinheit 3 und zum Erhalt oder Auslesen von Bilddaten von der Bilderfassungseinheit 2, sowie zur Bereitstellung eines Ansteuersignals zur Veränderung eines Öffnungsquerschnitts einer optischen oder optomechanischen Blende 5.

Die Bilderfassungseinheit 2 weist dabei eine Kamera 12 auf, sowie eine für diese Kamera 12 zur Abbildung erforderliche Objektiveinheit, welche mit einer Einrichtung 5 zur Verstellung einer Apertur-Blendenöffnung der Bilderfassungseinheit 2 ausgebildet ist.

Bildsensoren 12 haben in den letzten Jahren deutlich an Auflösung zugenommen, beispielsweise sind Kamerachips 12 mit 5, 10, 15, 20 oder mehr Megapixel heute durchaus üblich und preislich attraktiv, wobei der Trend auch für einfache Standard-Anwendungen durchaus zu noch höheren Auflösungen geht. Bildsensoren an sich sind heutzutage also meist hoch genug auflösend, um auch bei Messgeräten 20 digitales Zoomen einzusetzen, z.B. um in einem Bild weitere Details festlegen zu können, welche bei geringerer Auflösung nicht oder nur schwer erkennbar wären.

Im Beispiel einer Ausführungsform kann unter anderem etwa ein handelsüblicher Kamerachip 12 (z.B. mit einem CCD- oder CMOS-Matrix-Bildsensor) angewandt werden, welcher mit ca. 10 Megapixel und einem Sichtfeld von ca. 4 mm mal 5 mm eine Auflösung von etwa 1.4pm/Pixel bereitstellt.

In vielen Fällen übersteigt die Bildsensor-Auflösung auch die Auflösung der Anzeigeeinheit 3 für das aufgenommene Bild. Gründe hierfür liegen oft nicht nur in der technischen Machbarkeit von Displays 3 mit höheren Auflösungen, sondern auch in deren Zweckmäßigkeit, da bzw. auch die von einem menschlichen Bediener ohne optische Hilfen wahrnehmbare, effektiv nutzbaren Auflösung durch das Auge beschränkt ist, womit ein Display 3 mit noch höherer Auflösung kaum weitere Vorteile für den Betrachter bringen würde. Ein Display 3 zur Anzeige des aufgenommenen Bildes hat daher in vielen Fällen eine geringere Anzahl an Bildpunkten als der Kamera-Sensor 12, was eine Anwendung eines digitalen Zooms ebenfalls überlegenswert erscheinen lässt.

Im Beispiel einer Ausführungsform kann etwa zum Anzielen eine Bildanzeige 3 mit begrenzter Pixelzahl und Abmessung (z.B. ein im Gerät verbautes Display 3a, aber auch ein externes Smartphone 13, Tablet, etc.) verwendet werden, z.B. mit einer verbreiteten Bildauflösung in der Größenordnung von ca. 2 Megapixel (oder auch mehr oder weniger). Auf diesem Display 3 kann ein Gesamtbild 9 eines (beispielhaft oben genannten) 10 Megapixel Kamerasensors 12 angezeigt werden, wobei dies entsprechend in komprimierter Größe, in diesem Beispiel also etwa mit einem 1:5 Faktor der Verkleinerung, erfolgen muss. Ohne die Auflösung des vom Kamerasensor 12 erfassten Bildes zu überschreiten, kann auch ein digitales Zoomfenster eines Bildausschnitts 8, bspw. bis zu einer 1:1 Darstellung angezeigt werden. In vielen Anwendungen, beispielsweise für ein Anzielen eines gewünschten Ziels mit einem Messgerät, kann auch ein weiteres digitales Zoom, über die vom Bildsensor 12 gelieferte Auflösung hinaus, für den Bediener hilfreich sein, beispielsweise bis zu einem 5:1 Digitalzoomfaktor oder auch darüber, speziell je nach Ausgestaltung der Bildanzeige oder Vorlieben des Betrachters. Selbstredend können auch beliebige Zwischenzoomstufen angezeigt werden, etwa um einen gewünschten Bildausschnitt bildschirmfüllend darzustellen.

Digitales Zoom kann insbesondere auch von Interesse sein, da eine optisch oder optomechanisch in Ihrer Brennweite verstellbare Zoomoptik in hinreichender Qualität aufwändig zu realisieren und potentiell fehleranfällig ist, sowie einen erheblichen Platzbedarf aufweist und hohe Ansprüche an die verwendeten optischen Komponenten stellt. In speziellen Ausführungsformen der Bilderfassungseinheit 2 kann die digitale Zoom-Funktion auch zumindest teilweise in oder an der Bilderfassungseinheit 2 erfolgen. Beispielsweise kann die Auswahl des Bildausschnittes und der Auflösung für die Zoom-Funktion direkt auf dem Kamerachip oder dessen Chipansteuerung getätigt werden, womit z.B. die Datenmenge reduziert und die Auslesezeiten beschleunigt werden kann.

Meist kommen daher bei derartigen Anwendungen Objektiv-Optiken mit einer oder mehreren, fixen Brennweiten zum Einsatz. Es wird in Messgeräten also auf optisch und mechanisch komplexe, stufenlose Zoom-Objektive weitestgehend verzichtet.

Jedoch limitiert die Optik 11, welche vielfach als einfache Optik ausgebildet ist, die erzielbare Bildschärfe (bzw. somit die effektiv erzielbare Auflösung) eines Bilds 8,9. In vielen Anwendungen ist dabei auch eine Fix-Fokus Optik ausreichend, beispielsweise wenn mit dem Gerät 20 eine Abdeckung eines bei Fix-Fokus meist problematischen Nahbereich nicht erforderlich ist, also im allgemeinen Einsatz üblicherweise die Entfernungen zwischen Zielobjekt 31 und Messgerät 20 über 5m, über 10m oder gar darüber liegen. Eine fixe Anordnung von Objektivlinsen und Kamera ist nicht nur weniger aufwändig als eine exakte, lineare Verschiebung, sondern kann auch in einem robusteren und einfacher zu bedienenden Gerät 20 resultieren.

In **Fig. 1b** ist ein Beispiel illustriert, in welchem ein Übersichtsbild 9 im Display 3 des Suchers dargestellt wird, beispielsweise das gesamte größtmögliche Blickfeld der Bilderfassungseinheit 2 - also z.B. soweit als möglich ausgezoomt. Erfindungsgemäß wird dabei von der Steuereinheit 4 die Blende 5 gegenüber deren maximal möglicher Öffnung geschlossen. Damit wird das Übersichtsbild 9, welches auf dem niedriger auslösenden Display 3 der Bildanzeigeeinheit 2 angezeigt wird, vom Benutzer mit einer höheren Bildschärfe wahrgenommen, als ohne geschlossene Blende. Auch allfällige Abbildungsfehler der Objektiveinheit, welche vermehrt in den Randbereichen des Bildes in Erscheinung treten, werden damit verringert. Speziell, da Objektive für eine im wesentlichen zentrischen Anzielung eines Zielobjekts, entsprechend Ihrem Verwendungszweck in ihrer optischen Konstruktion vorzugsweise derart ausgelegt werden, um im Zentrum eine optimale Bildschärfe zu erzielen, und Randbereiche eher vernachlässigt werden bzw. so gut als mit vernünftigem Aufwand möglich angepasst werden. Entsprechend diesem Übersichtsbild 9 wird dann die Messachse des Geräts 20, z.B. durch Drehen und Schwenken der optischen Messeinheit um die Messachsen, auf den gewünschten Zielpunkt ausgerichtet. Dies kann beispielsweise manuell per Hand oder motorisiert durch den Bediener, aber auch automatisch durch das Gerät erfolgen, etwa indem das Gerät einen Zielpunkt selbst erkennt, oder ein Bediener den Zielpunkt auf dem Displaybild 9 markiert. Dabei wird beispielsweise ein spezifisches Haus, eine Hausecke, eine Messtafel, etc. als Zielobjekt 31 im Displaybild angewählt.

In **Fig. 1c** ist ein Beispiel illustriert, in welchem in weiterer Folge ein Zoomen hin zu einer Zoomdarstellung 8 auf dem Display 3 erfolgt ist, um den zuvor im angewählten Zielobjekt 31 bestimmten Messpunkt in seiner Lage weiter zu verfeinern, was im Übersichtsbild 9 nicht mit entsprechender Genauigkeit möglich war. Dabei wird, z.B. mit dem gezeigten Fadenkreuz der Zielpunkt in einem gezoomten, hier displayfüllend dargestellten Ausschnitt des, von der Bilderfassungseinheit eigentlich bereitgestellten Gesamtbilds angewählt, bzw. kann auch eine automatische Zielerkennung oder Objekterkennung durchgeführt werden. Durch die Zoomdarstellung eines Ausschnitts des Bildes kann dieses Anzielen entsprechend mit erhöhter Genauigkeit erfolgen. Erfindungsgemäß wird dabei von der Steuereinheit 4 mit zunehmendem Zoomfaktor die Blende 5 gegenüber dem Übersichtsbild weiter geöffnet, beispielsweise bis zu deren maximaler Öffnung, welche sich aus der Konstruktion des Objektivs ergibt.

Die Blende 5 kann dabei entweder stufenlos oder in diskreten Stufen verändert werden. Neben den in vielfachen Ausführungsformen als Komponenten am Markt erhältlichen gestuften oder stufenlosen Iris-Blenden und einer entsprechenden Antriebseinheit, kann erfindungsgemäß zum Verändern der Blende auch ein Einschwenken, Einklappen oder Einschieben von Blendenringen oder Teilen von Blendenringen, einem mechanischen Revolverrad mit verschiedenen Blendenöffnungen, etc. erfolgen. Eine Ausführungsform kann beispielsweise auch mit nur exakt zwei Blendenstellungen ausgebildet sein, welche abhängig vom digitalen Zoom im Anzeigebild umgeschaltet werden - speziell z.B. geschlossen für Übersichtsbild, offen für Zoombild.

Einige exemplarische Beispiele von Ausführungsformen von Abbildungs-Objektive, welche erfindungsgemäß eingesetzt werden können, sind in **Fig. 2a, Fig. 2b, Fig. 2c** und **Fig. 2d** illustriert. Dabei hängt die vorliegende Erfindung aber nicht primär von der Verendung eines speziellen Objektivs ab, wobei sie aber im allgemeinen bei Objektiven von niedrigerer Qualität ihre Vorteile meist besser ausspielen kann, als bei ohnehin perfekten Objektiven.

Derartige einfache Abbildungs-Objektive können dabei z.B. ausgebildet sein in Form eines häufig angewandten Triplets (wie z.B. nach den Prinzipien einer Tessar, Sonnar, Cooke-Linse, Petzval-Objektiv etc.), aber auch etwa als 1-LinsenGruppen (oder 1-Glied) Aufbau (wie z.B. Menisken, Wollastonsche Menisken, Landschaftslinsen, etc.) oder 2-Linsen-Gruppen (oder 2-Glied) Aufbau (wie z.B. Periskop, Aplanat, Hypergon, Topogon). Die vorliegende Erfindung kann aber auch bei komplexeren Objektivsystemen (wie z.B. einem Dagor, Unofokal, Selenar, Orthometar, Aristostigmat, Biotar, Prakticar, Biogon, Flektogon, verschiedenste Ausführungen von Doppel-Gauß-Objektiven, etc.) zur Anwendung kommen. Die Erfindung ist also im allgemeinen nicht auf einen speziellen Objektiv-Typ oder Aufbau beschränkt, wenngleich Sie ihre Vorteile vermehrt bei vergleichsweise (für sich genommen) minderwertigen, einfachen Objektiven (z.B. mit bis zu 4 Linsen oder Gliedern) ausspielen kann, da mit höherwertigen, komplexeren Objektiven (z.B. mit 5 oder mehr Linsen bzw. Gliedern) allenfalls per se schon eine zureichende Bildschärfe gegeben sein kann. Die Optik der Bilderfassungseinheit 2 kann dabei auch als Teleskopoptik ausgebildet werden.

In einem Beispiel einer Ausführungsform kann speziell auch eine Einzellinse mit einem Dublet und einer Einrichtung zur Verstellung der Belendöffnung als Objektiv für die Bilderfassungseinheit 2 verwendet werden. Diese kann insbesondere eine Teleskopoptik ausbilden. Auch Optiken mit einem oder mehreren diffraktiven optischen Elementen (abgekürzt DOE) können in einem erfindungsgemäßen System angewandt werden. Insbesondere kann beispielsweise auch ein Objektiv in Form einer diffraktiven Einzellinse angewandt werden, womit etwa ein kompakter Bauraum und geringerer Fertigungsaufwand erzielbar ist.

Entsprechend des Hauptzwecks einer zentrischen Anzielung eines Zielobjekts, für welchen das Messgerät 20 und speziell dessen Messkamera ausgelegt werden soll, kann erfindungsgemäß speziell auch ein vergleichsweise einfaches, oder gegenüber den bekannten Systemen vereinfachtes, Linsensystem als Objektiv für Bilderfassungseinheit 2 ausgelegt werden. Diese Auslegung kann beispielsweise primär auf eine möglichst hohe Auflösung im zentralen Bereich optimiert sein. Beispielsweise kann eine Ausführungsform mit einem Lens-Design mit nur drei sphärischen Linsen angewandt werden. Zwar ist bei gattungsgemäßen Bilderfassungseinheiten 2 zur Anzielung in Vermessungsgeräten in vielen fällen die Optik durch die erforderliche, große Apertur und den vergleichsweise großen Sensor für hohe Bildauflösung stark angespannt, jedoch kann erfindungsgemäß dabei die Auslegung derart erfolgen, dass die allfälligen optischen Fehler vermehrt in den Randbereichen der Linsen bzw. am Rand des Bildsensors auftreten. Mit der erfindungsgemäßen automatischen Blendenverstellung können ein Grossteil der dabei allenfalls entstehenden Bildfehler abgedeckt oder zumindest abgemildert werden. Zwar wäre es allenfalls auch möglich, durch ein komplexeres optisches System (z.B. mit fünf oder mehr Linsen) den Strahlengang besser zu korrigieren, und damit derartige Bildfehler ebenfalls zu minimieren und damit zu einem für den Benutzer gleichwertigen oder allenfalls geringfügig besseren Ergebnis zu gelangen - jedoch würde derartiges den benötigten Bauraum, Gewicht, Fertigungsaufwand, Komponentenanzahl und Kosten im Vergleich zur erfindungsgemäßen Lösung deutlich steigern.

Speziell sind in **Fig. 2a** und **Fig. 2b** zwei exemplarische Beispiele von Normalobjektiven 11a und 11b mit fester Brennweite dargestellt, welche beispielhaft mit drei Linsengruppen 14a, 14b und 14c und der Blende 5 ausgebildet sind.

In **Fig. 2c** ist Beispiel einer einfachen Ausführung eines Weitwinkel-Objektivs 11c fester Brennweite und nur zwei Linsengruppen 14a und 14b und der Blende 5 dargestellt, z.B. für eine Innenraum- oder Nahfeld-Vermessung, bei welchen ein breites Blickfeld vorteilhaft sein kann.

In **Fig. 2d** ist eine einfache, vergrößernde Tele-Optik 11d mit fester Brennweite und ebenfalls nur zwei Linsengruppen 14a und 14b und der Blende 5 dargestellt, welche beispielsweise bei einer Vermessung von fernen Zielen vorteilhaft sein kann.

Die in den Figuren 1 und 2 gezeigten Anordnungen der Blenden entlang des Strahlengangs des optischen Systems sind dabei lediglich beispielhaft zu sehen. So kann beispielsweise in anderen Ausführungsformen die Blende auch, insbesondere direkt, vor oder nach dem Linsenpaket platziert sein.

In einer speziellen Ausführungsform kann die Objektiveinheit 11 der erfindungsgemäßen Bilderfassungseinheit 2 auch in Form von optisch unterschiedlich ausgebildeten Wechselobjektiven austauschbar, oder auch mit einer - außerhalb und unabhängig vom erfindungsgemäßen digitalen Zoomenveränderbarer Brennweite ausgebildet sein.

Die exemplarischen Beispiele sind dabei nicht abschließend zu sehen. Speziell sind bei geodätischen Vermessungsgeräten vielfach auch noch komplexere optische Konstruktionen erforderlich, auf welche in den Zeichnungen der Übersichtlichkeit halber nicht im Detail eingegangen wird, beispielsweise etwa um eine koaxiale Entfernungsmessung, automatische Zielerkennung (ATR), unterschiedliche Messmodi, Zielachsenkorrektur, etc. zu implementieren.

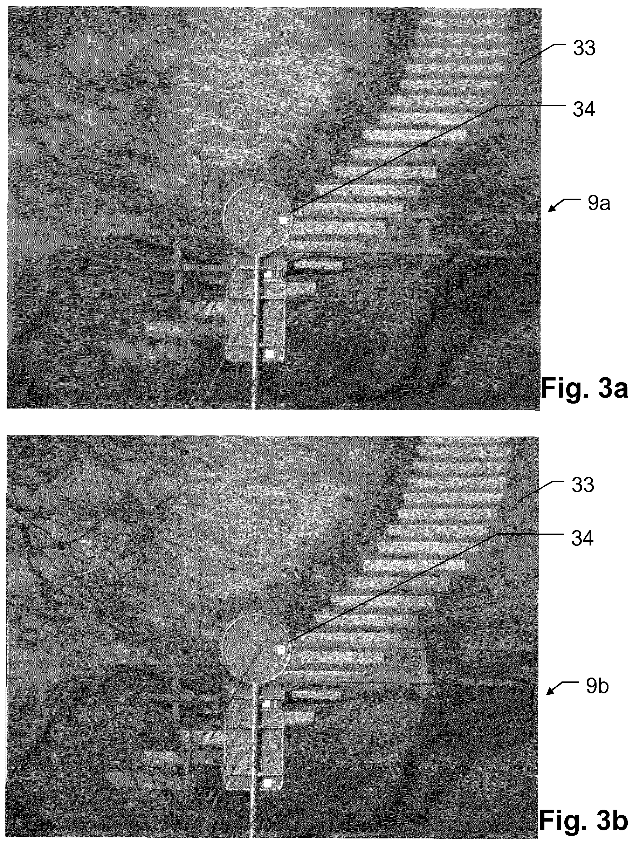

In **Fig. 3a** ist nochmals ein praktisches Beispiel eines Übersichts-Bildes 9a gezeigt. Wie in dem, in der Figur gezeigten Übersichtsbild 9a (z.B. wie auf dem Display dargestellt, mit einem verkleinernden Zoomfaktor von etwa 1:4 gegenüber der Auflösung des Bildsensors) ersichtlich, sind bei einer geöffneten Blende (z.B. bei einer Blendenzahl von etwa 2) die Randbereiche 33 sehr unscharf. Lediglich im Bereich des Bildzentrums 34 wird die maximale Auflösung erreicht.

Bei diesem Übersichts-Bild 9a, welches hauptsächlich zur groben Orientierung genutzt wird, kann die Auflösung relativ gering sein, das Bild - und somit auch dessen Randbereiche 33 - sollte aber ausreichend scharf dargestellt werden. Je näher an ein Messobjekt herangezoomt wird, um so höher muss die Auflösung im Bild sein, unscharfe Randbereiche 33 werden im Gegenzug von Zoomausschnitt abgeschnitten und sind daher nicht weiter störend. Entsprechend der vorliegenden Erfindung kann speziell in diesem Bereich eine Verbesserung erzielt werden, indem eine automatische, zoomfaktorabhängige Einstellung der Blendenöffnung erfolgt.

**Fig. 3b** zeigt im Übersichts-Bild 9b selbiges wie zuvor (also selber Bildausschnitt, ebenfalls mit einem verkleinernden Zoomfaktor von etwa 1:4 gegenüber der Auflösung des Bildsensors), jedoch mit einer geschlossenen Blende 5 (z.B. mit einer Blendenzahl von etwa 8) aufgenommen. Es lässt sich darin erkennen, dass die Auflösung im Zentrum 34 im Vergleich zum vorherigen Bild leicht geringer ist, im Gegenzug jedoch die Randbereiche 33 aber etwas schärfer abgebildet sind. Der subjektive Schärfeeindruck des Gesamtbildes ist dabei gegenüber zuvor deutlich angestiegen. Dabei spielt die veränderte Schärfentiefe jedoch eine untergeordnete Rolle, und auch ein erhöhtes Bildrauschen aufgrund von Lichtverlusten bei geschlossener Blende stellen sich als vernachlässigbar heraus, sondern erfindungsgemäß werden eine Vielzahl von Abbildungsfehlern, wie etwa sphärische und chromatische Abberation, oder andere Fehler, speziell von einfach aufgebauten Objektiven werden erfindungsgemäß, in einer anwendungsspezifisch vorteilhaften Weise und mit geringen baulichen und konstruktivem Aufwand beseitigt oder zumindest deutlich reduziert. Damit kann z.B. ein Vermessungsgerät verbessert werden oder in seinem Aufbau vereinfacht werden, z.B. indem die Anforderungen an die optischen Komponenten des Objektivs reduziert werden können, ohne dass das sichtbare Ergebnis darunter leidet.

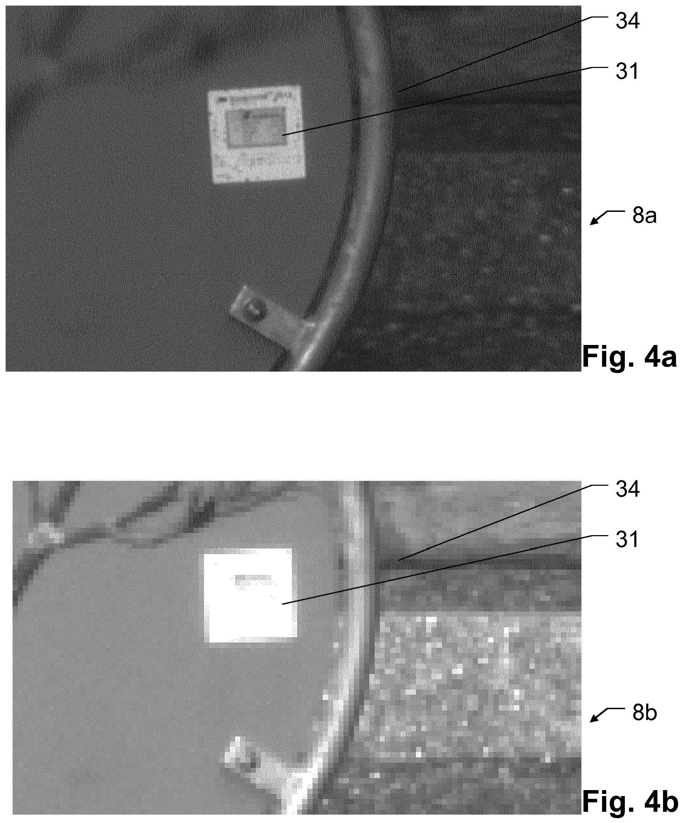

**Fig. 4a** zeigt einen gezoomten Ausschnitt 8a aus dem Zentrum 34 aus obigem Übersichts-Bild 9a aus Fig. 3a, also aus dem mit geöffneter Blende (z.B. Blendenzahl 2) aufgenommenen Bilde, aber in einer Zoomdarstellung (z.B. von etwa 2:1 gegenüber der Auflösung des Bildsensors) . Die gezeigte Zielmarke 31 ist darin hinreichend scharf abgebildet, um dies im Bild als Ziel klar und eindeutig zu markieren und zu hinreichend exakt anzuzielen und zu vermessen.

**Fig. 4b** zeigt im Zoom-Ausschnitt 8b selbiges wie in Zoom-Ausschnitt 8a in Fig. 4a, jedoch aus dem mit einer geschlossenen Blende aufgenommenen Bild 9b wie in Fig. 3b (also z.B. mit einer Blendenzahl von etwa 8). Es ist erkennbar, dass die Zielmarke 31 hier wesentlich unschärfer dargestellt ist als im Bild darüber, was eine Anzielung entsprechend erschwert und eine Vermessung entsprechend ungenauer oder fehleranfälliger werden lässt.

Neben geodätischen Messinstrumenten mit einer Anzielung von Zielobjekten, kann die vorliegende Erfindung auch auf Messinstrumente im Bereich Metrologie, also beispielsweise bei optischen Koordinatenmessgeräten angewandt werden, welche eine entsprechende Messkamera mit einem digital zoombaren, elektronischen Sucher aufweisen.

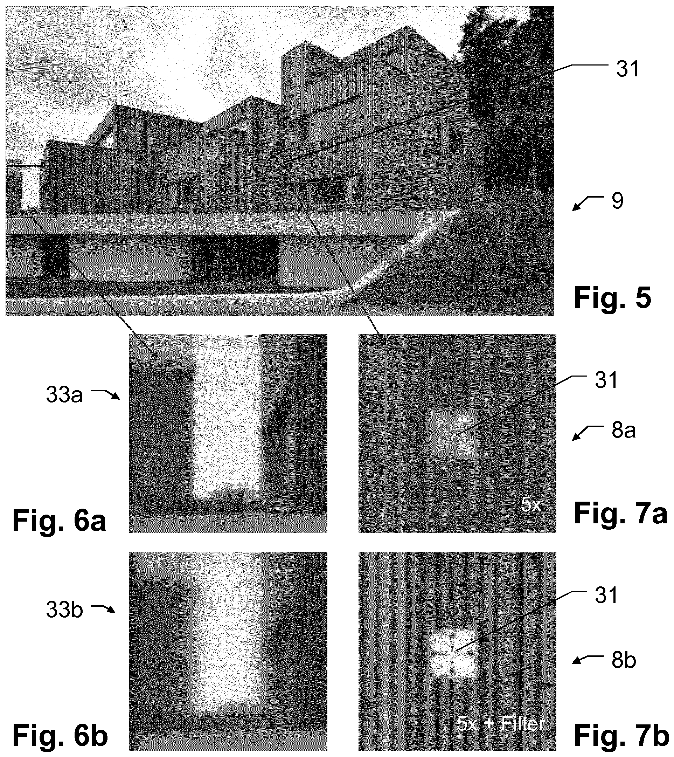

**Fig. 5** zeigt ein anderes Beispiel eines Übersichtsbilds 9 eines elektronischen Sucher-Bilds eines Vermessungsgeräts 20, mit welchem eine Zielmarke 31 zentral angezielt und dann mit einem Laserentfernungsmesser und/oder in Winkelkoordinaten von Achsen der Anzieleinheit zu vermessen ist. Die vorliegende Erfindung bringt also insbesondere spezifische Vorteile bei einer Anwendung, deren Zweck ein Ausrichten einer Zielachse auf einen visuellen Zielpunkt 31 ist. Dabei kann diese Zielachse insbesondere vorzugsweise im wesentlichen im Bereich des optischen Zentrums der Bilderfassungseinheit 2 liegen. Anders ausgedrückt kann dabei also insbesondere die Zielachse des Messgeräts 20 vorzugsweise mit einer optischen Achse der Bilderfassungseinheit 2 im wesentlichen zusammenfallen. Dabei kann im Bereich der optischen Achse der Bilderfassungseinheit 2 zum Beispiel optional - neben einer manuellen Auswahl eines Zielpunktes innerhalb des Bereiches - auch eine Messung durch optisches Fitting eines Template, beispielsweise einer Kante, eines bekannte Targets, einer Bohrung, etc. erfolgen. Im diesem zentralen Bereich kann dabei optional auch eine lokale, in der Bildebene laterale Distanz- oder Winkelmessung im Bild erfolgen.

Um eine genaue Anvisierung oder Anzielung eines visuellen Ziels, also etwa einer Zielmarke, eines Zielobjekts, etc. zu ermöglichen, ist eine hohe Auflösung des optischen Systems erforderlich. Für eine hohe Auflösung im Bild wird dabei im allgemeinen ein großer optischer Durchmesser des Objektivs benötigt. Ein Kameraobjektiv mit einer sich dabei ergebenden und/oder erforderlichen, großen Öffnung und somit geringen Blendenzahl, benötigt einen relativ aufwändigen Linsenaufbau, um das komplette Sichtfeld auf einen ebenfalls entsprechend hochauflösenden - und somit sensorflächenmäßig entsprechend großen - Kamerachip sauber abzubilden. Dies widerstrebt aber der Forderung nach einem möglichst einfachen und kostengünstigen Linsenaufbau, da beispielsweise mit einem einfachen System mit drei Objektivlinsen und einer Forderung nach einer möglichst hohen Bildmittenschärfe, die dann entstehenden optischen Fehler, speziell in den Randbereichen zu keinen befriedigenden Ergebnissen führen.

In **Fig. 6a** ist dabei der in Fig. 5 markierte Ausschnitt eines Randbereichs 33 mittels digitaler Bildverarbeitung vergrößert dargestellt. Hier erfolge die Aufnahme des Bildes mit einer geschlossenen Blendenöffnung, z.B. mit etwa f/8. Die Randschärfe entspricht dabei, speziell in Anbetracht der verwendeten, einfachen Optik im Objektiv, in etwa dem unter diesen Randbedingungen bestenfalls erwartbaren Ergebnis.

Rechts daneben, in **Fig. 7a** ist mit denselben Einstellungen, also aus demselben Aufnahmebild wie zuvor, jedoch der in Fig. 5 ebenfalls markierte Ausschnitt eines Zentralbereichs 31 mittels digitaler Bildverarbeitung vergrößert dargestellt, welcher die anzuvisierende Zielmarke 31 darstellt, oder besser gesagt darstellen sollte, da die Bildschärfe derart gering ist, dass sich diese kaum noch erkennen, geschweige denn exakt auswählen oder anzielen ließe. Auch automatische Zielerkennungsalgorithmen würden hier sehr wahrscheinlich versagen, oder zumindest ungenaue oder gar falsche Ergebnisse liefern.

In **Fig. 6b** und **Fig. 7b** ist nun die Szenerie aus Fig. 5 bzw. die jeweiligen Ausschnitte aus Fig. 6a und Fig. 7a nochmals dargestellt, wobei im unterscheid zu Fig. 6a und Fig. 7a lediglich die Blende auf des bei dieser Objektiv-Optik maximal mögliche Maß von ca. f/2.2 geöffnet ist, alle anderen Parameter (und auch allfällige automatische Bildbearbeitungsalgorithmen) gleich belassen sind.

In **Fig. 6b** ist hier die Randschärfe im Rahnbereich 33 deutlich unschärfer als zuvor. Ein Übersichtsbild 9, welches mit einer derartigen Einstellung aufgenommen wurde, wäre im Sinne des Betrachters wohl unzureichend, speziell für ein hochgenaues Vermessungsgerät. Für ein nicht oder nur wenig gezoomtes Übersichtsbild ist daher die Einstellung aus Fig. 6a, welche mit kleiner Blendenöffnung f/8 aufgenommen wurde, klar vorzuziehen.

In **Fig. 7b** ist jedoch ein vergrößerter Ausschnitt des zentralen Anzielbereichs des Suchers mit der Zielmarke 31 dargestellt, welche mit einer geöffneten Blende von f/2.2. Gegenüber der Figur darüber ist eine deutliche Zunahme der Bildschärfe und Erkennbarkeit der Zielmarke 31 gegeben, sodass dies besser und exakter anvisiert werden kann. In gezeigtem Bild 8b wäre beispielsweise auch eine weitere Vergrößerung der Zielmarke zur Anzielung durchaus vorteilhaft, wohingegen bei Fig. 7a ein weiteres Zoomen kaum hilfreich wäre, da die Darstellung ohnehin schon unscharf ist.

Der Begriff Zentral oder Zentralbereich im hier verwendeten Sinne kann, muss aber nicht zwingend, das geometrische Zentrum des Kamera-Sensors bezeichnen, sondern kann in manchen Ausführungsformen auch jenen Bereich bezeichnen, welcher durch die Optik der Kamera mit optimaler Schärfe abgebildet wird. In vielen Fällen fällt dieser Bereich im wesentlichen mit der optischen Achse der Kamera-Optik zusammen, dies muss aber in speziellen Ausführungsformen nicht zwingend der Fall sein. In einem anderen Beispiel können auch Ausführungsformen realisiert werden, bei denen die optische Achse der Objektiv-Einheit nicht zwingend mit dem Zentrum der Sensitivitätsfläche des Kamera-Sensors-Chips zusammenfällt.

Die erfindungsgemäße Blendeneinstellung kann dabei insbesondere distanzunabhängig erfolgen, also unabhängig von einer Distanz zwischen der Messkamera oder Bilderfassungseinrichtung 2 und dem Zielobjekt 31. In einer erfindungsgemäßen Ausführungsform kann die Blende 5 also speziell lediglich und alleinig in Abhängigkeit von einer vom Benutzer zur Anzeige gewählten Zoomstufe 7, also abhängig vom gewählten zentralen Bildausschnitt automatisch und unabhängig vom Benutzer durch die Steuereinheit 4 eingestellt werden.

Dabei werden zumindest zwei unterschiedliche Öffnungen der Blende 5 angewandt - speziell wobei bei einer steigenden Vergrößerung im Anzeigebild die Blende 5 weiter geöffnet ist. Die Blende 5 kann dabei beim Zoomen des Anzeigebilds - also insbesondere live zum Zeitpunkt der Aufnahme und Anzeige des Bildes - in zwei oder mehreren diskreten Stufen, oder auch kontinuierlich verstellt werden. Viele Ausführungsformen der vorliegenden Erfindung werden dabei in der Regel die Blendenzahl in einem Bereich von zwischen etwa 2 und etwa 10 oder in einem Sub-Bereich davon variieren, wobei erfindungsgemäße Ausführungsformen mit extremeren als Blendenzahlen (z.B. deutlich unter 2 oder deutlich über 10) wohl eher Spezialfälle abdecken. Die Abhängigkeit zwischen Zoomstufe 7 und Blende 5 kann dabei entsprechend in diskreten Schritten oder kontinuierlich in der Steuereinheit 4 hinterlegt sein, z.B. in Form eines analytischen Zusammenhangs, einer mathematischen Funktion, einer oder mehrerer Schaltschwellen, einer Treppenfunktion, einer Lookup-Table, etc. oder einer Kombination dieser Ansätze. Konkrete Parameter für eine Implementierung der erfindungsgemäßen automatischen, zoomabhängigen Blendenverstellung können dabei nicht nur theoretisch hergeleitet, sondern beispielsweise auch in Versuchsreihen, insbesondere bezüglich des jeweils subjektiv optimalen Bildeindrucks beim Benutzer, ermittelt werden. In einer Ausführungsform können beispielsweise auch mehrere Parametersätze oder Kurvenscharen für die Abhängigkeit der Blende 5 von der Zoomstufe 7 hinterlegt sein, wovon in Abhängigkeit einer weiteren Umgebungsbedingung (wie z.B. wie Helligkeit, Entfernung, Abbildungsgröße eines bekannten Objektes, welches z.B. mittels automatischer Zielerkennung oder visueller Objekterkennung ermittelt wird, etc.) jeweils eine gewählt wird. Beispielsweise kann in einer speziellen Ausführungsform dabei der Zoomfaktor auch automatisch aufgrund der Größe eines bekannten Targets (z.B. einer Zielmarke, Zieltafel, Prisma, etc.) im gezoomten Bild ausgewählt werden, entweder manuell oder automatisch durch eine Bilderkennungssoftware. In einer anderen Ausführungsform kann der Zoomfaktor auch automatisch aufgrund einer gemessenen Distanz zum anvisierten Ziel erfolgen. Derartiges kann insbesondere derart ausgebildet sein, dass eine möglichst konstante Größe des Targets im Bild erzielt wird, was z.B. Vorteile bezüglich einer leichteren, insbesondere automatischen, Auswertung des Bilds bringen kann.

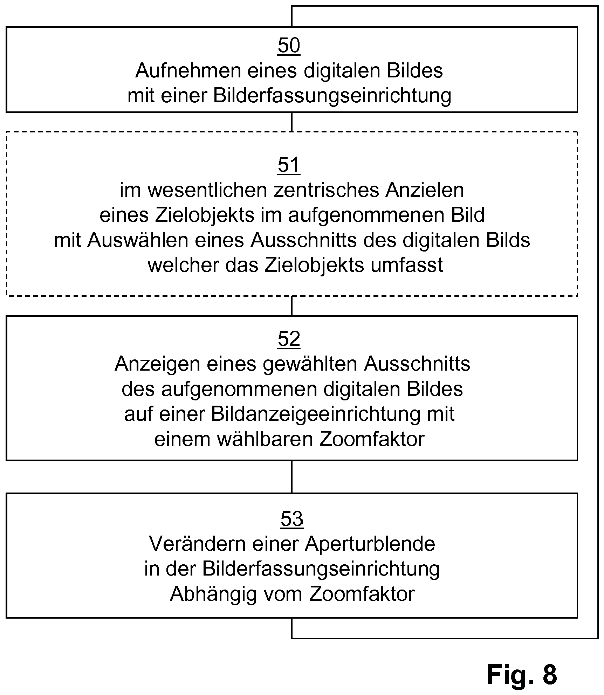

**Fig. 8** zeigt ein Blockdiagramm einer Ausführungsform eines erfindungsgemäßen Verfahrens oder einer erfindungsgemäßen Methode, speziell zur automatischen Ausführung bei einer Messkamera, welche insbesondere für eine im wesentlichen zentrische Anzielung von Zielobjekten ausgebildet ist, wie beispielsweise bei einem geodätischen Vermessungsgerät.

In Block 50 erfolgt ein Aufnehmen eines digitalen Bildes mit einer Bilderfassungseinrichtung 2. Die Bilderfassungseinrichtung 2 weist dabei beispielsweise zumindest einen Bildsensor 12, eine Objektiveinheit 11 und eine Aperturblende 5 auf. Das Aufnehmen kann speziell als eine im wesentlichen kontinuierliche Live-Aufnahme, etwa in Form eines Bild- oder Video-Datenstroms, erfolgen.

Der optionale Block 51 zählt an sich nicht zwingend zu der erfindungsgemäßen, automatisch ausgeführten Methode, sondern kann optional auch von einem oder mit Einwirken eines Benutzers erfolgen, weshalb dieser daher auch nicht zwingend als Teil der erfindungsgemäßen Methode anzusehen ist. Darin erfolgt ein im wesentlichen zentrisches Anzielen eines Zielobjekts oder Zielpunkt im aufgenommenen Bild mit einem Auswählen eines Ausschnitts oder Punkts aus dem digitalen Bilds, welcher das Zielobjekt umfasst. Beispielsweise kann ein solches Anzielen mit einem Ausrichten einer optischen Achse der Bilderfassungseinrichtung 2, welche vorzugsweise im wesentlichen mit einer Ziel- und/oder Messachse eines Messgeräts zusammenfällt, erfolgen. Beispielsweise mit einem Bewegen, also Drehen und/oder Verschieben der Bilderfassungseinrichtung 2 bzw. einer die Bilderfassungseinrichtung 2 aufweisenden Messeinrichtung eines Vermessungsgeräts.

In Block 52 erfolgt ein Anzeigen eines gewählten Ausschnitts des aufgenommenen digitalen Bildes auf einer Bildanzeigeeinrichtung 3 mit einem wählbaren Zoomfaktor. Der Zoomfaktor kann dabei beispielsweise derart ausgewählt sein, dass der Ausschnitt bildschirmfüllend oder einen definierten bildschirmbereichfüllend auf der Bildanzeigeeinrichtung 3 dargestellt wird. Da das Anzeigen an sich auch auf einem externen Gerät erfolgen kann, ist dabei erfindungsgemäß unter oben genanntem Anzeigen auch ein Bereitstellen eines derartigen Ausschnitts an eine externe Bildanzeigeeinrichtung 3 zu verstehen.

In Block 53 erfolgt erfindungsgemäss ein Verändern einer Aperturblende in der Bilderfassungseinrichtung Abhängig vom Zoomfaktor. Es erfolgt dabei also je ein Einstellen einer Öffnung der Blende in Abhängigkeit des gewählten Zoomfaktors.

Die obigen Schritte können dabei speziell kontinuierlich oder quasi-kontinuierlich, also beispielsweise auch im wesentlichen parallel zueinander erfolgen, beispielsweise etwa das Aufnehmen und Anzeigen zur Erzeugung eines Live-Bildes in einem elektronischen Sucher, also z.B. in einer sogenannten Direktübertragung. Ebenso kann dabei das Verändern der Blende in, vorzugsweise direkter, Reaktion auf ein Verändern des Zoomfaktors erfolgen, also ebenfalls zumindest annähernd oder im wesentlichen live. Dieser Sachverhalt ist im Blockdiagramm auch durch den Rückkoppelpfad zum Anfang symbolisiert.

In anderen Worten betrifft die Erfindung eine Methode mit einem Aufnehmen eines digitalen Bildes 9 mit einer Bilderfassungseinrichtung 2, wobei ein automatisches Verstellen einer Aperturblende 5 in der Bilderfassungseinrichtung 5 abhängig von einem Zoomfaktor 7 eines aktuell auf einer Anzeigeeinheit 3 dargestellten Ausschnitts 8 des aufgenommenen digitalen Bildes 9 erfolgt.

## Patentansprüche

1. Elektronisches Sucher-System (1), mit
einer elektronischen Bildaufnahmeeinrichtung (2) zur Aufnahme eines digitalen Bildes (9), insbesondere eine Messkamera in einem geodätischen Messinstrument oder in einem industriellen optischen Koordinatenmessgerät, einer elektronischen Bildanzeigeeinrichtung (3), und einer Steuereinheit (4), welche derart ausgebildet ist, entsprechend eines wählbaren Zoomfaktors (7) ein digitales Zoom eines aktuell gewählten Ausschnitts (8) des aufgenommenen digitalen Bildes (9) auf der elektronischen Bildanzeigeeinrichtung (3) bereitzustellen,
**dadurch gekennzeichnet, dass**
die Steuereinheit (4) derart ausgebildet ist, dass in Abhängigkeit vom Zoomfaktor (7) automatisch eine Aperturblende (5) der Bildaufnahmeeinrichtung (2) verstellt wird,
insbesondere wobei die Aperturblende (5) mit einer Irisblende, einer einschwenkbaren Blende, einer LCD-Blende oder einer zweiteiligen Blende ausgebildet ist.

2. Elektronisches Sucher-System (1) nach Anspruch 1,
**dadurch gekennzeichnet, dass** mit einem stärker vergrößernden Zoomfaktor (7), insbesondere hin zu einer vergrößerten Darstellung des digitalen Bildes (9), ein automatisches Verkleinern einer Blendenzahl (6) der Aperturblende (5), insbesondere hin zu einer größeren Blendenöffnung der Aperturblende (5), erfolgt.

3. Elektronisches Sucher-System (1) nach zumindest einem der Ansprüche 1 oder 2, **dadurch gekennzeichnet, dass** eine Objektiveinheit (11) der Bildaufnahmeeinrichtung (2) mit fester Brennweite ausgebildet ist.

4. Elektronisches Sucher-System (1) nach zumindest einem der Ansprüche 1 bis 3, **dadurch gekennzeichnet, dass** eine Objektiveinheit (11) der Bildaufnahmeeinrichtung (2) mit einer variablen Fokuseinstellung ausgebildet ist, insbesondere mit einem Verschieben eines Kamerachips (12) gegenüber einer Objektiveinheit (11) entlang einer optischen Achse des Bildaufnahmesystems (2).

5. Elektronisches Sucher-System (1) nach zumindest einem der Ansprüche 1 bis 4, **dadurch gekennzeichnet, dass** die Bildanzeigeeinrichtung (3) getrennt von der Bildaufnahmeeinrichtung (2) ausgebildet ist, insbesondere als Bildanzeigeeinrichtung (3) einer verdrahtet oder drahtlos angebundenen Bedieneinheit (13), welche speziell als Smartphone oder Tablet-PC ausgebildet sein kann.

6. Elektronisches Sucher-System (1) nach zumindest einem der Ansprüche 1 bis 5, **dadurch gekennzeichnet, dass** eine physikalische Bildauflösung der Bildaufnahmeeinrichtung (2) größer ist als eine physikalische Bildauflösung Bildanzeigeeinrichtung (3), insbesondere um mehr als das Doppelte oder mehr als das Vierfache größer.

7. Elektronisches Sucher-System (1) nach zumindest einem der Ansprüche 1 bis 5, **dadurch gekennzeichnet, dass** die Bildaufnahmeeinrichtung (2) mit einer ersten Öffnungsstellung der Aperturblende (5) ausgebildet ist, bei welcher eine erste Anzeige eines Ausschnitts des von der Bildaufnahmeeinrichtung (2) aufgenommenen Bilds mit einer ersten Vergrößerung auf der Bildanzeigeeinrichtung (3) erfolgt, und
die Bildaufnahmeeinrichtung (2) mit einer zumindest zweiten Öffnungsstellung der Aperturblende (5) ausgebildet ist, bei welcher eine zweite Anzeige eines Ausschnitts des von der Bildaufnahmeeinrichtung (2) aufgenommenen Bilds mit einer zweiten Vergrößerung auf der Bildanzeigeeinrichtung (3) erfolgt,
wobei die erste Öffnungsstellung kleiner ist als die zweite Öffnungsstellung und die erste Vergrößerung kleiner ist als die zweite Vergrößerung.

8. Elektronisches Sucher-System (1) nach zumindest einem der Ansprüche 1 bis 7, **dadurch gekennzeichnet, dass** eine Objektiveinheit (11) der Bildaufnahmeeinrichtung (2) als eine Triplet-Optik mit drei Gliedern (14) oder als eine Optik mit zwei Gliedern (14) ausgebildet ist, insbesondere wobei die Objektiveinheit (11) mit drei sphärischen Linsen aufgebaut ist oder wobei die Objektiveinheit (11) mit einer diffraktiven Optik aufgebaut ist oder wobei die Objektiveinheit (11) mit einer Einzellinse und einem Dublet aufgebaut ist.

9. Geodätisches Vermessungsgerät (20) mit
einer Zielachse (39), insbesondere eines Laserentfernungsmesser, zur geometrischen Vermessung von Koordinaten eines Zielobjekts (31) welches mit der Zielachse anvisiert wird, und
mit einem elektronischen Sucher-System (1) nach zumindest einem der Ansprüche 1 bis 8 zur Ausrichtung der Zielachse (39) auf das Zielobjekt (31),
wobei die Zielachse (39) zu einer optischen Achse der Bilderfassungseinrichtung (2) des elektronischen Sucher-Systems (1) im wesentlichen zentrisch ausgerichtet ist.

10. Geodätisches Vermessungsgerät (20) nach Anspruch 9, **dadurch gekennzeichnet, dass** das geodätische Vermessungsgerät (20) als Theodolit, Tachymeter oder Totalstation ausgebildet ist.

11. Verfahren zur automatischen Steuerung eines elektronischen Sucher-Systems (1) mit Zoom-Funktion, insbesondere nach einem der Ansprüche 1 bis 8, insbesondere in einem geodätischen Vermessungsgerät (20), mit einem Verändern einer Öffnung einer Blende (5) einer Bilderfassungseinrichtung (2) des Sucher-Systems (1), welches in Abhängigkeit eines digitalen Zoomfaktors (7) einer Darstellung eines, von der Bilderfassungseinrichtung (2) aufgenommenen, digitalen Bildes auf eine Bildanzeigeeinrichtung (3) des Sucher-Systems (1) erfolgt.

12. Verfahren nach Anspruch 11, **dadurch gekennzeichnet, dass** die Öffnung bei einem stärker vergrößernden digitalen Zoomfaktor (7) größer ist als bei einem weniger stärk vergrößernden digitalen Zoomfaktor (7).

13. Verfahren zur Bereitstellung eines digital zoombaren Bildes in einem elektronischen Sucher-System, insbesondere nach einem der Ansprüche 1 bis 8, zur Anzielung eines Zielobjekts, insbesondere in einem geodätischen Vermessungsgerät (20), mit,
▪ einem Aufnehmen eines digitalen Bildes mit einer Bilderfassungseinrichtung (2), in welchem digitalen Bild das Zielobjekt, vorzugsweise zentral, bildlich dargestellt ist,
▪ einem digitalen Zoomen eines aktuell gewählten Ausschnitts (8) des aufgenommenen digitalen Bildes (9) entsprechend eines wählbaren Zoomfaktors (7), und
▪ einem Bereitstellen des aktuell gewählten Ausschnitts (8) zur Anzeige auf einer elektronischen Bildanzeigeeinrichtung (3),
**dadurch gekennzeichnet, dass**
▪ ein automatisches Verändern einer Öffnung einer Aperturblende (5) der Bildaufnahmeeinrichtung (2) in Abhängigkeit vom Zoomfaktor (7) erfolgt,
insbesondere wobei die Öffnung der Aperturblende (5) bei stärker vergrößerndem Zoomfaktor (7) vergrößert wird.

14. Verfahren zum Anzielen eines Zielobjekts (31) mit einem elektronischen Sucher-System, insbesondere nach einem der Ansprüche 1 bis 8, insbesondere in einem geodätischen Vermessungsgerät (20), mit:
▪ einem Aufnehmen eines digitalen Bildes mit einer Bildaufnahmeeinrichtung (2), in welchem digitalen Bild das Zielobjekt (31) dargestellt ist,
▪ einem Auswählen des Zielobjekts (31) im digitalen Bild,
▪ einem im wesentlichen zentrischen Anzielen des ausgewählten Zielobjekts (31) in digitalen Bild durch ein Ausrichten der Bildaufnahmeeinrichtung (2) auf das Zielobjekt (31),
▪ einem digitalen Vergrößern eines zentralen Ausschnitts des digitalen Bildes um einen wählbaren Zoomfaktor (7), in welchem Ausschnitt das Zielobjekt (31) abgebildet ist,
**dadurch gekennzeichnet, dass** mit einem Verändern des Zoomfaktors (7) automatisch ein Verändern einer Öffnung einer Aperturblende (5) der Bildaufnahmeeinrichtung (2) durchgeführt wird, insbesondere wobei bei einem stärkeren digitalen Vergrößern ein Weiten der Öffnung der Aperturblende (5) erfolgt.

15. Computerprogrammprodukt mit Programmcode, welcher gespeichert auf einem Datenträger oder als elektromagnetische Welle bereitgestellt ist, welcher zur Ausführung auf einem Digitalrechner ausgebildet ist, und welcher Programmcode in Abhängigkeit eines gewählten Zoomfaktors (7) eines zur Anzeige bereitgestellten Ausschnitts (8) eines von einer Bilderfassungseinrichtung (2) aufgenommenen digitalen Bildes (9), ein Ansteuersignal zur Einstellung einer Aperturblende (5) der Bildaufnahmeeinrichtung (2) bereitstellt, insbesondere wenn dieser Programmcode in einer Steuereinheit (4) eines elektronischen Sucher-Systems (1) nach zumindest einem der Ansprüche 1 bis 8 oder in einem Gerät (20) nach zumindest einem der Ansprüche 9 oder 10 ausgeführt wird.
